# EUROPÄISCHE PATENTSCHRIFT

(11) **EP 1 046 523 B1**
(45) Veröffentlichungstag und Bekanntmachung des Hinweises auf die Patenterteilung: **28.05.2003**
(21) Anmeldenummer: 00104291.0
(22) Anmeldetag: 01.03.2000
(51) Int. Cl.: B60H 1/00

(54) **Verfahren zur Regelung der Innenraumtemperatur in Kraftfahrzeugen**
Method for regulating interior temperature of a motor vehicle
Procédé pour réguler la température intérieure d'un habitacle de véhicule automobile

(30) Priorität: 17.04.1999 DE 19917502
(43) Veröffentlichungstag der Anmeldung: 25.10.2000
(73) Patentinhaber: Bayerische Motoren Werke Aktiengesellschaft, 80809 München (DE)
(72) Erfinder: Oberberger, Stefan, 82205 Gilching (DE); Heil, Michael, 85570 Markt Schwaben (DE)

(56) Entgegenhaltungen:
- EP-A- 0 896 889
- US-A- 5 775 415

## Beschreibung

Die Erfindung bezieht sich auf ein Verfahren zur Regelung der Innenraumtemperatur in Kraftfahrzeugen nach dem Oberbegriff des Patentanspruchs 1.

Derartige Verfahren sind seit langem bekannt to 0.2.B.aus EP0 896 889 A. Zum technischen Hintergrund wird weiterhin auf die Artikel "Elektronische Temperaturregelung - ein Mittel zur Verbesserung von Komfort und Bedienbarkeit von Fahrzeugheizungen" (VDI-Berichte Nr. 515, 1984, S. 161) und "Steuerungs- und Regelungssysteme für Heizungs- und Klimaanlagen in Kraftfahrzeugen" (VDI-Berichte Nr. 515, 1984, S. 167) hingewiesen.

Derartige Klimaanlagen in Form von Innenraumtemperaturregelungsanlagen erreichen im Kühlbetrieb bei Außentemperaturen über 25°C und bei einer hohen Außenluftfeuchte mittels Umluftbetrieb bzw. mittels erhöhtem Umluftanteil gegenüber dem Frischluftanteil die niedrigsten Austrittstemperaturen. Daher wird bei bekannten Klimaanlagen der Umluftanteil bei Temperaturen über 25°C bis zu 100% erhöht, wenn die Abweichung (Y) der Ist-Innenraumtemperatur von der Soll-Innenraumtemperatur eine vorgegebene Schwelle überschreitet. Durch diese Stellgröße Y kann jedoch nicht die Außenluftfeuchte bestimmt werden, die dennoch einen hohen Einfluß auf die Regelgüte ausübt. Vor allem in Küstenregionen mit mittleren Außentemperaturen zwischen 25°C und 30 °C und hoher Außenluftfeuchte führt das bekannte Verfahren zu einem ständigen Pendeln zwischen Umluft- und Frischluftbetrieb. Die Fahrzeuginsassen bemerken dies durch steigende Belüftungsaustrittstemperaturen, schwankende Innenraumtemperaturen und muffigen Geruch, immer wenn die Klimaanlage den Umluftbetrieb bzw. den Umluftanteil ausschaltet.

Weiterhin ist zur Vermeidung des muffigen Geruchs das sog. Reheat- oder Gegenheizverfahren bekannt. Dabei wird durch Abkühlung der Luft auf Werte knapp über dem Nullpunkt am Verdampfer die Luft getrocknet. Abhängig von der vorgegebenen Innenraumtemperatur muß anschließend die getrocknete und gekühlte Luft wieder aufgeheizt werden. Dies führt zu einem erheblichen Energieaufwand.

Es ist Aufgabe der Erfindung, die oben genannten Nachteile zu beseitigen und insbesondere bei hoher Außenluftfeuchte eine komfortable und energiebewußte Regelung zu ermöglichen.

Diese Aufgabe wird durch die Merkmale des Patentanspruchs 1 gelöst. Vorteilhafte Weiterbildungen sind die Gegenstände der Unteransprüche.

Bei den bekannten Vorrichtungen und Verfahren zur Regelung der Innenraumtemperatur in Kraftfahrzeugen durch eine elektronisch gesteuerte Klimaanlage sind üblicherweise ein Verdampfer, Mittel zur Verstellung des Frischluftanteils und des Umluftanteils im Fahrzeuginnenraum sowie Mittel zur Erfassung der Verdampfertemperatur, der Innenraumtemperatur und der Außenlufttemperatur bereits vorhanden.

Erfindungsgemäß wird mit den vorhandenen Mitteln der Umluftanteil erhöht, wenn der Umluftanteil kleiner als 100 % ist, die Abweichung der Ist-Innenraumtemperatur von der Soll-Innenraumtemperatur eine vorgegebene erste Schwelle (z. B. 20%) überschreitet, die Außentemperatur im wesentlichen konstant bleibt und die Verdampfertemperatur ansteigt.

Vorzugsweise wird der Umluftanteil nur dann erhöht wird, wenn die Außentemperatur größer als eine vorgegebene zweite Schwelle (z. B. 22°C) ist.

Auch kann in einer weiteren Ausgestaltung der Erfindung abhängig oder unabhängig von der Außentemperatur der Umluftanteil erhöht werden, wenn die Brennkraftmaschine im Leerlaufbetrieb ist. Denn die Verdampfertemperatur steigt nicht nur bei einer hohen Außenluftfeuchte aufgrund der zunehmenden Kälteleistung, die zur Entfeuchtung erforderlich ist, sondern auch im Leerlaufbetrieb mangels ausreichender Kompressorleistung. Der Leerlaufbetrieb kann beispielsweise über die Brennkraftmaschinendrehzahl ermittelt werden, die üblicherweise ohnehin bereits als elektrisches Eingangssignal an der für derartige Regelungen verwendeten Steuereinheit anliegt.

Vorzugsweise wird der Umluftanteil wieder reduziert, wenn die Verdampfertemperatur nicht weiter ansteigt oder die Abweichung der Ist-Innenraumtemperatur von der Soll-Innenraumtemperatur eine vorgegebene dritte Schwelle (z. B. 25%) unterschreitet.

Weiterhin kann der Frischluftanteil für eine vorgegebene erste Zeitspanne (z. B. 60 s) erhöht werden, nachdem der Umluftanteil länger als eine vorgegebene zweite Zeitspanne (z. B. 10 min) auf 100% erhöht war. Hierdurch können die Forderungen zum Bereitstellen einer Mindestaußenlufterneuerung erfüllt werden, vorzugsweise jedoch nur insoweit, daß für den Fahrzeuginsassen die beschriebene Komfortbeeinträchtigung nicht spürbar wird.

Mit diesem erfindungsgemäßen Verfahren findet sowohl eine Energieeinsparung aufgrund einer geringeren Kälteleistungsanforderung zur Entfeuchtung der Luft am Verdampfer als auch eine Komfortsteigerung im Hinblick auf Geruchsverhinderung und konstanter Innenraumtemperatur bei erhöhter Außenluftfeuchtigkeit statt.

## Patentansprüche

1. Verfahren zur Regelung der Innenraumtemperatur in Kraftfahrzeugen durch eine elektronisch gesteuerte Klimaanlage mit einem Verdampfer, mit Mitteln zur Verstellung des Frischluftanteils und des Umluftanteils im Fahrzeuginnenraum sowie mit Mitteln zur Erfassung der Verdampfertemperatur, der Innenraumtemperatur und der Außenluftemperatur, **dadurch gekennzeichnet, daß** der Umluftanteil erhöht wird, wenn der Umluftanteil kleiner als 100 % ist, wenn die Abweichung der Ist-Innenraumtemperatur von der Soll-Innenraumtemperatur eine vorgegebene erste Schwelle überschreitet, wenn die Außentemperatur im wesentlichen konstant bleibt und wenn die Verdampfertemperatur ansteigt.

2. Verfahren nach Patentanspruch 1, **dadurch gekennzeichnet, daß** der Umluftanteil nur dann erhöht wird, wenn die Außentemperatur größer als eine vorgegebene zweite Schwelle ist.

3. Verfahren nach Patentanspruch 1 oder 2, **dadurch gekennzeichnet, daß** der Umluftanteil nur dann erhöht wird, wenn die Brennkraftmaschine im Leerlaufbetrieb ist.

4. Verfahren nach einem der Patentansprüche 1 bis 3, **dadurch gekennzeichnet, daß** der Umluftanteil wieder reduziert wird, wenn die Verdampfertemperatur nicht weiter ansteigt oder die Abweichung der Ist-Innenraumtemperatur von der Soll-Innenraumtemperatur eine vorgegebene dritte Schwelle unterschreitet.

5. Verfahren nach einem der Patentansprüche 1 bis 4, **dadurch gekennzeichnet, daß** der Frischluftanteil für eine vorgegebene erste Zeitspanne erhöht wird, nachdem der Umluftanteil länger als eine vorgegebene zweite Zeitspanne auf 100% erhöht war.

## Claims

1. A method for regulating the internal temperature of motor vehicles by means of an electronically controlled climate control installation with an evaporator, with means to adjust the proportions of fresh air and of re-circulated air in the inner space of the vehicle as well as with means to detect the temperature of the evaporator, the internal temperature and the outer air temperature, **characterised in that** the proportion of re-circulated air is increased when the proportion of re-circulated air is less than 100%, if the deviation of the actual inner temperature from the target inner temperature exceeds a prescribed first threshold, if the external temperature remains essentially constant and if the evaporator temperature rises.

2. A method according to claim 1, **characterised in that** the proportion of re-circulated air is only increased if the external temperature is greater than a prescribed second threshold.

3. A method according to claim 1 or claim 2, **characterised in that** the proportion of re-circulated air is only increased if the internal combustion engine is idling.

4. A method according to any of the claims 1 to 3, **characterised in that** the re-circulated portion is again reduced when the evaporator temperature does not rise further or the deviation of the actual internal temperature from the target internal temperature falls below a predetermined third threshold.

5. A method according to any of the claims 1 to 4, **characterised in that** the fresh air proportion for a prescribed first period is increased after the re-circulated portion has been increased to a 100% for longer than a prescribed second time period.

## Revendications

1. Procédé de régulation de la température de l'habitacle d'un véhicule automobile par une installation de climatisation à commande électronique comportant un évaporateur avec des moyens de réglage de la teneur en air frais et de la teneur en air ambiant dans l'habitacle du véhicule, ainsi que des moyens pour détecter la température d'évaporation, la température de l'habitacle et la température de l'air extérieur,
**caractérisé en ce que**
l'on augmente la fraction d'air ambiant si la fraction d'air ambiant est inférieure à 100 %, si la déviation entre la température réelle de l'habitacle par rapport à la température de consigne de l'habitacle dépasse un premier seuil prédéterminé, si la température extérieure reste essentiellement constante et si la température de vaporisation augmente.

2. Procédé selon la revendication 1,
**caractérisé en ce que**
la partie d'air ambiant n'est augmentée que si la température extérieure est supérieure à un second seuil prédéterminé.

3. Procédé selon la revendication 1 ou 2,
**caractérisé en ce que**
la fraction d'air ambiant n'est augmentée que si le moteur à combustion interne fonctionne au ralenti.

4. Procédé selon l'une des revendications 1 à 3,
**caractérisé en ce qu'**
on réduit de nouveau la fraction d'air ambiant si la température d'évaporation ne continue plus d'augmenter ou si la déviation entre la température réelle dans l'habitacle et la température de consigne de l'habitacle passe en dessous d'un troisième seuil prédéterminé.

5. Procédé selon l'une des revendications 1 à 4,
**caractérisé en ce que**
l'on augmente la fraction d'air frais pendant une première période prédéterminée après que la fraction d'air ambiant ait été augmentée à 100 % pendant plus d'une seconde période prédéterminée.
